Europäisches Patentamt

European Patent Office

Office européen des brevets

(11) Publication number: **0 401 460**
**A1**

## EUROPEAN PATENT APPLICATION

(21) Application number: **90100999.3**

(22) Date of filing: **18.01.90**

(51) Int. Cl.⁵: **F23G 5/027**

(30) Priority: **05.06.89 JP 140975/89**

(43) Date of publication of application:
**12.12.90 Bulletin 90/50**

(84) Designated Contracting States:
**DE**

(71) Applicant: **Kaneko, Masamoto**
**788-2, Yanaka-cho**
**Takasaki-shi, Gunma-ken(JP)**

(72) Inventor: **Kaneko, Masamoto**
**788-2, Yanaka-cho**
**Takasaki-shi, Gunma-ken(JP)**

(74) Representative: **Graf, Walter, Dipl.-Ing.**
**Sckellstrasse 1**
**D-8000 München 80(DE)**

(54) A method and apparatus for disposing waste.

(57) The present invention relates to a method for disposing of waste containing carbon compounds such as life waste discharged from everyday life and industrial waste discharged from factories and so forth, in order to reduce the volume of waste as much as possible prior to the final disposal by land reclamation at specified disposal sites so that the useful life of reclamation sites for final disposal can be extended and so that disposal costs can be lowered, as well as apparatus directly used for said method. The disposal method and apparatus of the present invention reduce the volume of waste by incinerating it without creating any public hazards (pollution), and enable the combustion heat to be effectively used for boiler heating, drying by kilns, etc. In particular, the invention relates to the waste disposal method and apparatus, wherein the raw waste to be treated is dryly distilled by a gas over, to gasify most of the volatile combustible component to reduce the volume as much as possible, and once the volatile component gas is sufficiently burnt, to accumulate the combustion heat generated by the combustion or to effectively use it for drying. The finally burnt gas is cleaned so as to be free from dust and odor, after which, it can be safely discharged into the atmosphere without causing any pollution; or on the other hand, the waste remaining after dry distillation by said gas oven can be safely turned into ash reducing the volume for final disposal by land reclamation.

FIG. 1

# A METHOD AND APPARATUS FOR DISPOSING WASTE

## FIELD OF THE INVENTION

The disclosed art belongs to the field of system engineering for incinerating life waste or industrial waste in order to reduce the volume prior to the final disposal by land reclamation at specified disposal sites.

## BACKGROUND OF THE INVENTION

As people's lives are enhanced in all aspects, consumption expands as a matter of course, and resulting life waste including garbage and used merchandise is discharged in ever growing amounts. The waste is collected by routine periodical garbage collection service or the like and transported to predetermined disposal facilities for such treatment as incineration and so on.

On the other hand, a large volume of industrial waste is discharged by producers such as factories which supply goods to support the large consumption mentioned above. The disposal of such living waste and industrial waste is a matter of growing concern, and such waste is ordinarily disposed of by dumping it into landfills, often located in mountainous areas, and by land reclamation on the seashore and the like.

However, such living waste and industrial waste mainly consist of minor waste discharged from kitchens and so on, large-sized waste such as refrigerators and washing machines and organic compounds such as hydrocarbon compounds including the raw material waste from factories and so forth. In addition, the waste is remarkably large in its original size, and if it is directly disposed of in landfills (dumping) or by land reclamation, the respective disposal sites will soon reach their limits in capacity, and future disposal capacity will correspondingly be lowered. Furthermore, because disposal sites are usually located in areas far away from urban areas, so-called illegal dumping in nearby vacant lots is difficult to prevent. Moreover, the waste disposed of by dumping and reclamation will deteriorate with the lapse of time, changing the soil and polluting the ground water, thus presenting public hazard (pollution) problems.

Therefore, in order to keep the functions of the planned disposal sites operating as long as possible, it is necessary to reduce the volume of the waste dumped for landfill and land reclamation. Hence, incineration has been encouraged as a means for reducing the volume of waste, often followed by solidifying the residue together after incineration for the sake of land reclamation.

For the incineration of waste, so-called direct burning has been adapted in most cases. Therefore, in an incinerator, the combustion and gasification of combustibles of waste occur concurrently, and as a result, perfect combustion cannot be achieved. Even if it could be achieved, a large volume of dust is contained in the generated gas, and the dust and harmful gas in the flue gas are usually diffused into the atmosphere. Therefore, pollution of the atmosphere arises which is, of course, detrimental. In addition, offensive odors are often generated. For these reasons, the expansion of incineration facilities is confronted with the opposition of inhabitants living near the incineration facilities and its use has not been easily realized. Since the capacity of incineration facilities cannot easily be expanded, incineration for reducing the volume of waste to be dumped for land reclamation cannot be provided, and as a result, disposal sites threaten to reach their limits in capacity soon, as mentioned above. As a result of disposal sites often being located far away from urban areas, waste is many times illegally dumped in nearby vacant lots. In addition, waste producers, including waste disposal contractors often cannot be punished for their responsibility, resulting in the wasteful consumption of social capital, which brings about serious economic burden.

Although it is known that the incineration of waste for reducing the volume of the waste prior to the final disposal of the waste is preferable in principle, there have been created air pollution problems which make this solution inconvenient.

The recovery and effective use of combustion heat generated by the incineration of waste can be naturally considered. However, there exist the disadvantages that offensive odor is diffused and that the nearby environment is polluted. Further, it is difficult to carry out sufficient heat control because of unstable combustion during the incineration, and hence, effective use cannot be achieved with certainty.

The technique for reducing the volume of waste by using dry distillation for incineration instead of direct combustion has been theoretically developed, but in actuality, the technique is still in the "trial and error" state, not yet reaching the level of practical application. Furthermore, systemic combinations with a dry distillation furnace, a combustion furnace and an effective heat-using system have not been efficiently established. Moreover, tests and so on are being carried out without studying the applicability to the waste-to-be-treated.

Therefore, sufficient results appear not to have been obtained under the present situation.

Recent life waste and industrial waste can be classified into three major groups, namely solid, fluid and sludge. The waste can be classified in more detail as shown in Table 1.

Table 1

1. Waste tires (rubber-based)
2. Waste lumber (including swarf and so on)
3. Printed circuit boards and other electronic parts
4. Foamed plastics (styrol)
5. Food refuse (including bean-curd refuse) and sludge
6. Waste television sets (and other electrical home appliances)
7. HCL- containing materials
8. FRP (waste boats and others)
9. Glassfiber-containing materials
10. Medical waste
11. General refuse
12. Urban refuse
13. Paper and pulp (pulper)
14. Waste plastics (thermosetting and thermoplastic)
15. Dry batteries
16. Heavy-metal containing materials
17. Residue of animals and plants
18. Carcasses
19. Waste oils and waste liquids
20. Large-sized refuse
21. Others

As shown in Table 1 above, most of the life waste and industrial waste belong to solid waste and tend to be combustible organic-compounds. Therefore, they inherently have the ability to be incinerated, reducing the volume prior to the final disposal by land reclamation and landfill (dumping).

SUMMARY OF THE INVENTION

The use of landfills and land reclamation as the means for finally disposing of life waste and industrial waste based on the above-mentioned prior art have been confronted with the technical problem that disposal sites reach their limits in capacity after a period of time. Although incineration of the waste is possible, technical problems are that pollution is caused by the incineration. Most of such waste is substantially combustible and easy to handle.

In view of the above, it is the primary object of the present invention to provide an improved waste disposal method and apparatus useful in the incineration-technique utilizing field of the pollution prevention industry. The waste is gasified by dry distillation and the dry distillation gas is perfectly burned in order to make the combustion gas free from dust and odorless, thus eliminating such public hazards as air pollution, and thus stabilizing the ash by distillation for uniformizing volume reduction as much as possible. Thus, the reclamation capacity of disposal sites can last for a longer period of time, and the emission of pollutants can be prevented by promoting waste disposal.

To achieve the above object, i.e., to solve such a problem as to reduce, as much as possible, the volumes of solid, fluid, sludge, etc. containing organic combustible components including life waste such as garbage and consumables in consumption life and industrial waste discharged from factories prior to their final disposal by landfills and land reclamation, the present invention proposes technical means which gasifies the waste by a dry distillation gas oven with air shut off, to perfectly gasify the volatile combustible component, and guides the volatile component gas into the burner furnace of a combustion furnace and ignites it for perfect combustion in the combustion furnace. In the dry distillation gas oven, the waste is stratified into a volatile component layer, a red heat layer and an ash layer. The volatile component gas discharged from the gas oven is perfectly burnt in the combustion furnace. The combustion heat generated therefrom is recovered for heat accumulation or used for heating boilers or secondarily burning or drying waste such as fluid or sludge, and is subsequently cooled and cleaned so as to be free from dust and odorless in order to be discharged into the atmosphere without causing any pollution in the environment. The ash, no longer containing any combustible component, is discharged from the dry distillation gas oven in the final stage and is remarkably reduced in volume, to be finally disposed of by landfills (dumping) or land reclamation. The reduced ash could alternatively be solidified by concrete so as to be effectively used as a foundation material for construction materials or other raw materials.

BRIEF DESCRIPTION OF THE DRAWINGS

The above and other objects and the nature and advantages of the present invention will become more apparent from the following detailed description of a specific embodiment, taken in conjunction with the drawings, wherein:

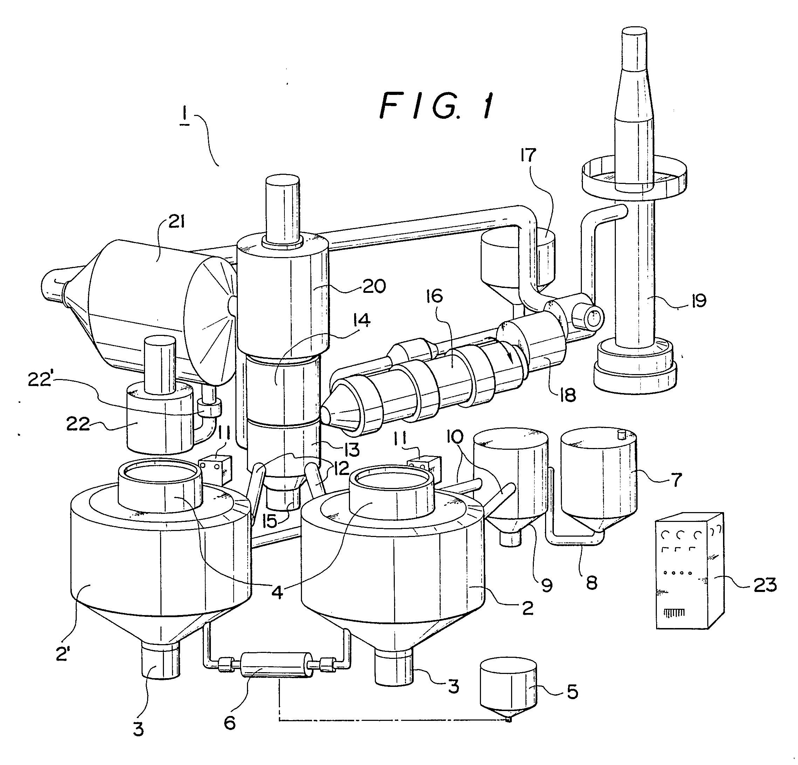

Fig. 1 is an enlarged perspective view showing a major portion of the apparatus;

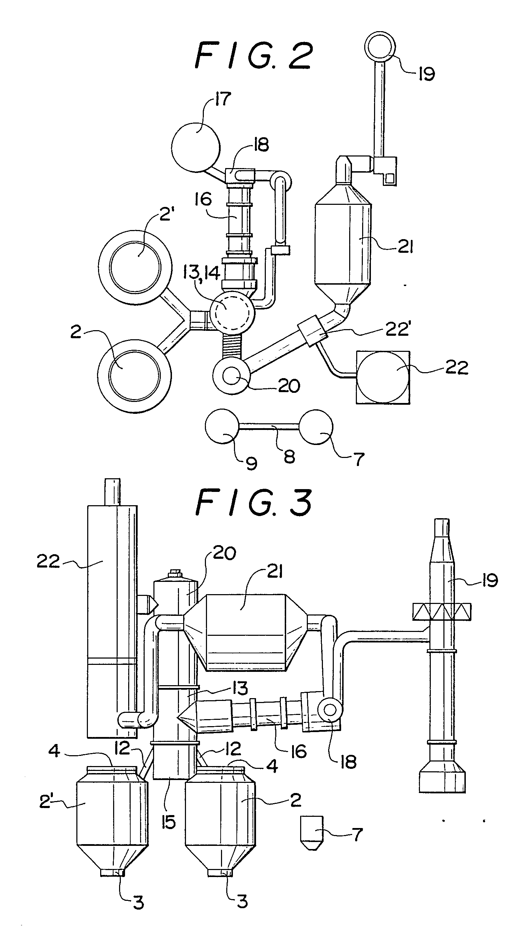

Fig. 2 is a plan view showing the major portion of Fig. 1; and

Fig. 3 is a side view showing the major portion of Fig. 1.

## DETAILED DESCRIPTION OF THE PREFERRED EMBODIMENT

An example of the present invention is described below based on the drawings.

Reference numeral 1 denotes a waste disposal apparatus in accordance with the present invention. Respective subunits are interconnected and installed on a base not illustrated. Reference numerals 2 and 2' denote dry distillation gas ovens provided in parallel. Each of the ovens 2,2' has a water jacket not illustrated, for the prevention of overheating, an ash discharger 3 on the bottom, and a solid waste (shown in Table 1) charger 4 on the top. At an intermediate low position between the dry distillation gas ovens 2 and 2', a change-over valve 6 for supplying air from a forced draft fan 5 for the sake of ignition for dry distillation is provided to keep one of the dry distillation gas ovens 2 and 2' in operation and the other standing by in interlocked operation or, in the alternative, to enable both the dry distillation gas ovens to be brought into concurrent and continuous operation.

From a soft water tank (water storage tank) 9 connected to a raw water tank 7 through a pipe 8, water is fed to the water jackets of the dry distillation gas ovens 2 and 2' through pipes 10 and 10. From steam distributors 11 provided atop the dry distillation gas ovens 2 and 2', water from the water jackets is returned to the soft water tank (water storage tank) 9.

The dry distillation gas ovens 2 and 2' are also connected to a burner furnace 13 through the ducts 12 and 12. The burner furnace 13 is connected to a combustion furnace 14 and an air supply fan 15.

The combination furnace 14 is connected to a rotary kiln 16, to directly dry, by the combustion heat from the combustion furnace 14, the waste oils and fluids of item 19 in Table 1, etc. supplied from a hopper 17. An inducing fan 18 exhausts the gas through a chimney 19.

Above the combustion furnace 14, a cooling tower 20 is provided and is connected to an electric precipitator (dust collector) 21. The combustion gas is made free from dust and odorless, after which it is exhausted through the inducing fan 18 and the chimney, to prevent the pollution of the ambient atmosphere.

The electric precipitator (dust collector) 21 is connected to a slaked lime silo 22 through a gas reactor 22' to make the combustion gas in the electric precipitator 21 pollution-free.

Reference numeral 23 denotes a controller which electrically controls the respective mechanisms of the above-mentioned respective subsystems and the valves of the pipes, etc. according to a predetermined program.

Though not illustrated, the ash dischargers 3 and 3' of the respective dry distillation gas ovens 2 and 2' are provided with a belt conveyor for discharge, the chimney 19 is provided with a heat sensor and NOX detector, and the combustion furnace 14 is provided with a temperature sensor to control the supply to the dry distillation gas ovens 2 and 2' so that optimum dry distillation can be achieved.

The amount of and combustion of the gas generated from the volatile combustible component of waste in the dry distillation gas ovens 2 and 2' and supplied to the combustion furnace 14 are controlled secondarily by the controller 23.

In the above structure, the waste, which is not illustrated, is charged into either or both of the dry distillation gas ovens 2 and 2' through the chargers 4 provided on the top, and the waste is ignited to start the dry distillation with the air supply controlled. The effective combustible component of the waste is gasified as a volatile component by the heating, and is accumulated at the top, to form a volatile component gas layer at the top, a red heat layer in the middle and an ash layer on the bottom. To prevent overheating, cooling water from the raw water tank 7 is supplied to the water jackets of the dry distillation gas ovens 2 and 2' through the pipes 10 and 10 from the soft water tank (Water storage tank) 9. The volatile component gas stored at the top is supplied to the burner furnace 13 through the ducts 12 and 12 and the gas is ignited as a pilot flame by the air supplied by the air supply fan 15, and burnt in the combustion furnace 14 above it.

The gas burnt in the combustion furnace 14 is supplied on one hand to the rotary kiln 16 to directly dry the waste oils and fluids supplied from the hopper 17, after which the gas is sent by the inducing fan 18 into the chimney 19. On the other hand, the combustion gas from the combustion furnace 14 is cooled by the cooling tower 20 and fed into the electric precipitator (dust collector) 21, and dust is caught and collected. Harmful chlorine-based gas and so on are removed and made odorless in the gas reactor 22' by the slaked lime from the slaked lime silo 22, and then the now harmless gas is diffused into the atmosphere through the chimney 19 by the inducing fan 18. Therefore, such public hazards as dust and offensive odor in the atmosphere around the apparatus 1 can be avoided, keeping the atmosphere sufficiently clean.

In the case, as mentioned above, one of the dry distillation gas ovens 2 and 2' can be operated while the other is standing by, or one can be operated while the other is being filled with waste or the like in integrated operation, or both can be operated continuously. With the progress of dry distillation, a volatile component gas layer at the top, a red heat layer in the middle and the ash layer on the bottom are formed inside. As soon as the incineration is finally completed, the ash is discharged through the discharger 3 and is transported for the final disposal by land reclamation or the like or solidified for use as a foundation structural-material for construction.

As stated above, the operation of the apparatus 1 is properly controlled by the controller 23 according to a predetermined program and sensors and so on in order to keep satisfactory operational conditions. The dry distillation of waste, the combustion of volatile component gas, and the efficient use of combustion heat are beneficial results while non-polluting combustion gas is discharged into the atmosphere. The ash finally discharged from the dischargers 3 is left without any combustible component at all, while the volume has been reduced greatly. Therefore, at the time of land reclamation, after the transportation to a final disposal site, the volume is reduced remarkably compared with ash containing the combustible component obtained by the conventional direct combustion method. Therefore, the disposal site can be used for a longer period of time before becoming full, and the cost for transportation to a remote disposal site is correspondingly decreased.

The present invention is not limited to the above example. The combustion heat produced by the combustion of the volatile component gas generated by dry distillation can also be effectively used, not only for the drying of fluid waste by said rotary kiln, but also for the secondary burning of solid waste or the burning of various kinds of waste including those listed in Table 1, or for boiler heating for use for space heating or power generation, or as a source of operation energy for factories, or for other various applications.

It goes without saying that the present invention can be applied to other kinds of waste in addition to those enumerated in Table 1.

It is, of course, possible to use only one dry distillation gas oven or to simultaneously use three or more dry distillation gas ovens in parallel or in series.

Change in design is possible such that the cleaning of the gas after burning volatile component gas by dry distillation can, of course, be performed not only by dry dust collection but also by wet dust collection using a wet cyclone. Thus, any appropriate cleaning means can be used.

As described above, according to the present invention, the volatile component of the daily waste generated by consumption life and the industrial waste containing carbon compounds, etc. discharged from various factories can be perfectly removed as volatile component gas, to form ash which no longer has the ability to be burnt. Therefore, the discharged ash is remarkably reduced in volume when compared with the conventional incineration method of direct combustion. As a result, final disposal sites for land reclamation can be used for longer periods of time, and further, waste producers and waste disposal contractors can greatly reduce their disposal costs. Thus, social capital can be more effectively utilized. In addition, a secondary advantage will be that illegal dumping in vacant lots will be reduced.

Because the volatile component gas generated by dry distillation sufficiently contains the volatile component, it can be perfectly burnt by ignition by a burner and combustion by a combustion furnace, and the gas can be cleaned by a dust collector and a noxious gas treating apparatus or the like so as to become free of dust, as well as odorless, and then, it can be diffused via a chimney or the like into the atmosphere, without upsetting the inhabitants around the apparatus with air pollution or the diffusion of harmful gas.

Moreover, the combustion heat generated by the combustion of volatile component gas can be effectively used for burning or drying solid or fluid waste, or for heating boilers for space-heating or operation energy of factories, thus making the social benefit economically beneficial.

As described above, according to the present invention, the volume of life waste and industrial waste containing the volatile component can be extremely reduced, to facilitate the final disposal by land reclamation and to remarkably reduce the economical burden. In addition, the combustion heat can be effectively used, and such problems like public hazards including air pollution will no longer occur. Thus, the present invention will produce three excellent effects by one means.

The foregoing description of the specific embodiments will so fully reveal the general nature of the invention that other can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation.

**Claims**

1. A waste disposal method, in which waste is incinerated to reduce the volume of the waste prior to the waste's final disposal and in which the combustion heat produced is effectively used including the steps of:

gasifying the volatile component of raw waste by dry distillation in order to reduce the volume;

burning the volatile component gas to effectively use the combustion heat; and

cleaning the combustion gas to discharge it into the atmosphere.

2. The waste disposal method of claim 1, including the further step of disposing of the ash after the dry distillation.

3. A waste disposal method, according to claim 1, wherein said raw waste can be either solid, fluid or sludge.

4. A waste disposal method, according to claim 1, including the further step of solidifying said ash for the purpose of final disposal.

5. A waste disposal method according to claim 1, including the further step of disposing of said ash by land reclamation.

6. A waste disposal method, according to claim 1, wherein the gasification of the volatile component by said dry distillation is carried out in a plurality of stages concurrently.

7. A waste disposal method, according to claim 1, wherein said combustion heat is effectively used to dry other waste.

8. A waste disposal method, according to claim 1, wherein said combustion heat is effectively used to incinerate other waste.

9. A waste disposal method, according to claim 1, wherein said combustion heat is effectively used for boiler heating and steam recovery.

10. A waste disposal method, according to claim 1, wherein said combustion heat is effectively used by heat accumulation.

11. A waste disposal method, according to claim 10, wherein said accumulated heat is effectively used for power generation.

12. A waste disposal apparatus in which waste is incinerated to reduce the volume of waste prior to the final disposal and to effectively use the combustion heat, wherein a dry distillation gas over, having a waste charging port, is connected to a combustion furnace, which is in turn connected to a gas cleaner.

13. A waste disposal apparatus in which waste is incinerated to reduce the volume of waste prior to the final disposal and in which combustion heat is effectively used, wherein a dry distillation gas over, having a waste charging port is connected to a combustion furnace and to an apparatus for effectively using the combustion heat.

14. A waste disposal apparatus, according to claim 12, wherein said gas cleaner is of the wet type.

15. A waste disposal apparatus, according to claim 12, wherein said gas cleaner is of the dry type.

16. A waste disposal apparatus, according to claim 12, wherein a plurality of dry distillation gas ovens are provided.

17. A waste disposal apparatus, according to claim 13, wherein a plurality of dry distillation gas ovens are provided.

18. A waste disposal apparatus, according to claim 13, wherein said apparatus for effectively using combustion heat is a dryer.

19. A waste disposal apparatus, according to claim 13, wherein said apparatus for effectively using the combustion heat is a heat accumulator.

FIG. 1

# F I G. 2

# F I G. 3

## DOCUMENTS CONSIDERED TO BE RELEVANT

EP 90100999.3

| Category | Citation of document with indication, where appropriate, of relevant passages | Relevant to claim | CLASSIFICATION OF THE APPLICATION (Int Cl⁵) |
|---|---|---|---|
| X | EP - A2 - 0 312 742 (KLÖCKNER-HUMBOLDT-DEUTZ) * Totality * -- | 1-4,7, 9,12- 14,18 | F 23 G 5/027 |
| X | EP - A1 - 0 262 291 (DEUTSCHE BABCOCK ANLAGEN) * Totality * -- | 1-3, 7-9, 12,13 | |
| X | EP - A2 - 0 257 018 (VOEST-ALPINE) * Totality * -- | 1,3,7, 9,12- 14,18 | |
| X | DE - A - 2 328 545 (NATIONAL RESEARCH DEVELOP-MENT) * Page 2, lines 2-6; fig. 1 * -- | 1-3,7 | |
| A | EP - A1 - 0 224 999 (G.G.C.) * Page 11, lines 18-22; claims 1,11; fig. 1 * ---- | 1-3,9, 11 | |

TECHNICAL FIELDS SEARCHED (Int Cl⁵)

F 23 G 5/00
F 23 G 7/00

The present search report has been drawn up for all claims

| Place of search | Date of completion of the search | Examiner |
|---|---|---|
| VIENNA | 31-05-1990 | TSCHÖLLITSCH |